# EUROPEAN PATENT APPLICATION

(11) **EP 4 737 698 A1**
(43) Date of publication of application: **06.05.2026**
(21) Application number: 25212130.6
(22) Date of filing: 29.10.2025
(51) Int. Cl.: F02C 6/08, F02C 7/18, F02K 3/115

(54) **TURBINE ENGINE COOLED AIR SUPPLY**

(30) Priority: 29.10.2024 US 202418930015
(71) Applicant: RTX Corporation, Farmington, CT 06032 (US)
(72) Inventor: GERLACH, David W., Ellington, 06029 (US)
(74) Representative: Dehns

(57) **Abstract**

A gas turbine engine (20) has: a compressor (24); a combustor (56); a turbine (28); a gaspath (C) through the compressor (24), combustor (56) and turbine (28); a bleed flowpath (920) from the gaspath (C); an air-air heat exchanger (200) having a heat donor leg along the bleed flowpath (920) ; and a Ranque-Hilsch vortex tube (220) having an inlet (222) along the bleed flowpath (920) and having a cool air outlet (228) and hot air outlet (226). The cool air outlet (228) is connected to a cold air load.

## Description

### BACKGROUND

The disclosure relates to gas turbine engines. More particularly, the disclosure relates to cooled air supply.

Gas turbine engines (used in propulsion and power applications and broadly inclusive of turbojets, turboprops, turbofans, turboshafts, industrial gas turbines, and the like) divert and cool bypass air for delivery to various engine and aircraft loads.

Example engine loads include: bearing compartment buffering; oil cooling; and electronics cooling. Example non-engine aircraft loads include: airframe cooling; electronics cooling; and cabin and cockpit cooling.

Separately, the Ranque-Hilsch vortex tube is a passive mechanical device (no moving parts needed) that receives a compressed gas inlet flow and outputs respective hot and cold outlet gas flows (i.e., respectively above and below the inlet flow temperature but at lower pressure). The cold outlet is at one end of a tubular body and the hot outlet is at the other end. Such tubes are known to be used in machine tool cooling in shop/factory situations wherein the inlet flow is shop air.

In one group of example vortex tubes, the inlet flow tangentially enters a swirl chamber near the cold end so that angular momentum of the flow causes the flow to form an outer vortex flowing along the inner surface of the tube toward the hot outlet. An outlet nozzle allows gas specifically from this outer layer to escape at that end. The outlet nozzle may be formed by a conical centerbody in the tube producing flow cross-sectional area contraction/convergence toward the hot outlet. The centerbody directs a remainder of the gas to pass back toward the cold outlet as an inner vortex of concentrically within the outer vortex.. The gas in the inner vortex passes back toward the cold outlet. The cold outlet flow will be at a lower temperature than the inlet flow and the hot outlet flow will be at a higher temperature than the inlet flow.

### SUMMARY

One aspect of the disclosure involves a gas turbine engine comprising: a compressor; a combustor; a turbine; a gaspath through the compressor, combustor and turbine; a bleed flowpath from the gaspath; an air-air heat exchanger having a heat donor leg along the bleed flowpath; and a Ranque-Hilsch vortex tube having an inlet along the bleed flowpath and having a cool air outlet and hot air outlet.

A further example of the foregoing may additionally and/or alternatively include: a bearing compartment; and a buffer chamber for the bearing compartment and coupled to the cool air outlet.

A further example of the foregoing may additionally and/or alternatively include: a first seal between the buffer chamber and the bearing compartment and a second seal to an opposite side of the buffer chamber. Optionally the second seal is between the buffer chamber and an external environment. Optionally the first seal and the second seals are between a shaft and static structure.

A further example of the foregoing may additionally and/or alternatively include: a second buffer chamber for the bearing compartment and coupled to the cool air outlet.

In a further example of any of the foregoing, additionally and/or alternatively, the gas turbine engine of is a turbofan wherein the air-air heat exchanger has a heat receiving leg along a bypass flowpath of the turbofan.

In a further example of any of the foregoing, additionally and/or alternatively, the hot air outlet is positioned to discharge to the bypass flowpath.

In a further example of any of the foregoing, additionally and/or alternatively, the gas turbine engine does not have a fuel-air heat exchanger along the bleed flowpath.

In a further example of any of the foregoing, additionally and/or alternatively, the gas turbine engine does not have an orifice or venturi along the bleed flowpath.

In a further example of any of the foregoing, additionally and/or alternatively, the Ranque-Hilsch vortex tube has a controllable hot air outlet valve.

In a further example of any of the foregoing, additionally and/or alternatively, the controllable hot air outlet valve comprises: a centerbody; and an actuator for axially shifting the centerbody.

In a further example of any of the foregoing, additionally and/or alternatively, the Ranque-Hilsch vortex tube has a controllable cold air outlet valve.

In a further example of any of the foregoing, additionally and/or alternatively, the controllable cold air outlet valve is an iris valve.

A further aspect of the disclosure involves a method for using the gas turbine engine, the method comprising: compressing air in the compressor section; combusting fuel mixed with the compressed air in the combustor; expanding combustion gas from the combusting in the turbine section to drive the compressing; passing bleed air from the compressor along the bleed flowpath to the Ranque-Hilsch vortex tube; discharging a hot air stream from the hot air outlet; and passing a cold air stream from the cold air outlet to a load.

In a further example of any of the foregoing, additionally and/or alternatively, the load is a buffer chamber of a bearing compartment.

A further example of the foregoing may additionally and/or alternatively include: a first seal between the buffer chamber and the bearing compartment and a second seal to an opposite side of the buffer chamber. Optionally the second seal is between the buffer chamber and an external environment. Optionally the first seal and the second seals are between a shaft and static structure.

A further example of the foregoing may additionally and/or alternatively include: a second buffer chamber for the bearing compartment and coupled to the cool air outlet.

In a further example of any of the foregoing, additionally and/or alternatively, the cold air stream bypasses a seal and exits the bearing compartment as a mixed oil/air outflow along a recirculating oil flowpath including an oil inflow to the bearing compartment.

A further example of any of the foregoing may additionally and/or alternatively include controlling a cool air outlet valve and a hot air outlet valve to balance satisfying a cooling or buffering load from the cold air outlet while limiting bleed flow.

A further aspect of the disclosure involves a gas turbine engine comprising: a compressor; a combustor; a turbine; a gaspath through the compressor, combustor and turbine; a bleed flowpath from the gaspath. The engine further includes means for: receiving air from the bleed flowpath; separating the received air into a hotter portion and a cooler portion; discharging the hotter portion; and passing the cooler portion to a load.

In a further example of any of the foregoing, additionally and/or alternatively, the load is a buffer chamber for a bearing compartment.

A further example of the foregoing may additionally and/or alternatively include: a first seal between the buffer chamber and the bearing compartment and a second seal to an opposite side of the buffer chamber. Optionally the second seal is between the buffer chamber and an external environment. Optionally the first seal and the second seals are between a shaft and static structure.

A further example of the foregoing may additionally and/or alternatively include: a second buffer chamber for the bearing compartment and coupled to the cool air outlet.

In a further example of any of the foregoing, additionally and/or alternatively, the discharging is to a bypass flowpath.

A further aspect of the disclosure involves a method for using a gas turbine engine. The method comprises: compressing air in a compressor section; combusting fuel mixed with the compressed air in a combustor; expanding combustion gas from the combusting in a turbine section to drive the compressing; passing bleed air from the compressor section; separating the bleed air into a hotter portion and a cooler portion; discharging the hotter portion; and passing the cooler portion to a load.

In a further example of any of the foregoing, additionally and/or alternatively, the load is a buffer chamber of a bearing compartment.

In a further example of any of the foregoing, additionally and/or alternatively, the discharging is to a bypass flowpath.

In a further example of any of the foregoing, additionally and/or alternatively, a temperature difference between the hotter portion and the cooler portion is at least 25°C.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a schematic sectional view of a gas turbine engine.
FIG. 2 is a view of a vortex tube.
FIG. 3 is an enlarged view of a bearing compartment and buffer chamber of the engine of FIG. 1.

Like reference numbers and designations in the various drawings indicate like elements.

### DETAILED DESCRIPTION

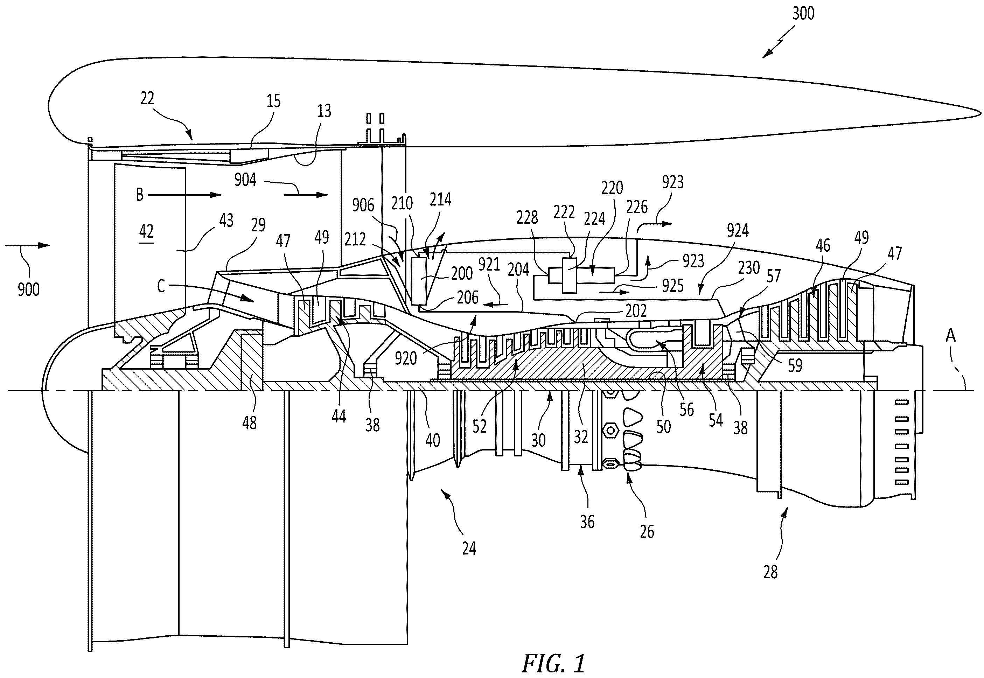

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the example gas turbine engine 20 is illustrated as a geared architecture 48 to drive the fan 42 at a lower speed than the low speed spool 30. The inner shaft 40 may interconnect the low pressure compressor (LPC) 44 and low pressure turbine (LPT) 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor (HPC) 52 and a second (or high) pressure turbine (HPT) 54. A combustor 56 is arranged in the example gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

A bleed air flowpath 920 extends from one of the compressor sections to an air-air heat exchanger 200 exposed to an external airflow. This bleeds a bleed flow 921 from the core airflow 902 along the core flowpath C. An example external airflow for a turbofan engine is the bypass flow 904 along the bypass flowpath B (e.g., a portion 906 thereof). In the illustrated situation, the heat exchanger is mounted to the core case within an ID aerodynamic structure/core cowl to the inner diameter (ID) side of the bypass flowpath with an upstream scoop 212 and downstream pressure recovery exit 214 respectively diverting the flow 906 from the main bypass flow and back to the main bypass flow. In some situations, the heat exchanger may be in the bypass duct and the flow portion 906 may be a sector portion of the bypass flow.

The bleed flow 921 may pass from a bleed port 202 via a conduit 204 to an inlet 206 of the heat exchanger 200. The bleed flow 921 (or one or more branch(es) thereof) then passes via a conduit 208 from the outlet 210 of the heat exchanger to the inlet 222 of a vortex tube 220. The inlet may be an inlet of an inlet manifold 224. The vortex tube ultimately divides the inlet airflow into a hot discharge airflow 923 from a hot air outlet 226 and a cold discharge airflow 925 from a cold air outlet 228. The cold air outlet is coupled to a cooling load via appropriate conduits 230 along a cold air branch 924 of the bleed flowpath. The outlets are at opposite axial ends 232, 234 of a body of the vortex tube having an axis 236.

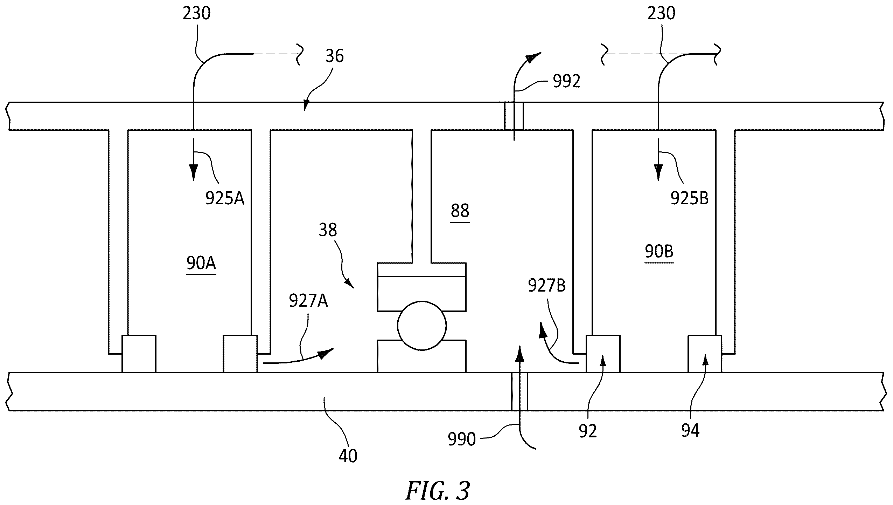

An example cooling load is bearing compartment 88 (FIG. 3) buffering via connection to a buffer chamber 90A and/or 90B. The example buffer chamber 90A is to a forward side of the bearing compartment 88 and the example buffer chamber 90B is to an aft side. The example bearing intervenes between an inner shaft (e.g., 40) and static structure 36. Nevertheless, other locations are possible. The buffer chamber typically intervenes between the bearing compartment and the external environment. An example buffer chamber is separated from the bearing compartment via a seal 92 at one side of the buffer chamber (e.g., that seals between the shaft 40 and the static structure 36; e.g., a carbon seal) and may itself be separated from the external environment via a second seal 94 at the other side of the buffer chamber (e.g., that seals between the shaft 40 and the static structure 36; e.g., also a carbon seal). By maintaining greater air pressure in the buffer chamber than in the bearing compartment, the cold airflow 925 (shown branching into flows 925A and 925B from which portions 927A and 927B bypass (e.g., leak past) the associated seal 92) may resist oil leakage from the bearing compartment and help drive oil within the bearing compartment along a recirculating oil flowpath (see oil inflow 990 and oil/air outflow 992). It is thus seen how the particulate removal from the cool airflow reduces contaminants in the bearing compartment and oil which would otherwise decrease engine life. The relatively low temperature of the cold airflow helps with bearing and oil cooling.

The hot airflow 923 is discharged such as a waste stream. For example, it may be discharged into the bypass flow to exit the engine and/or an engine bay. Due to the centrifuge effect of the vortex tube operation, the hot airflow will accumulate particulate debris from the inlet flow 921 and thus leave the cold airflow 925 depleted of particulates relative to the inlet flow. This effect allows the vortex tube, in potential implementations, to replace a filter/separator unit (e.g., a centrifugal separator) and a second cooling stage (e.g., a fuel-air heat exchanger) in the modification of a baseline engine or configuration thereof.

A controllable vortex tube 220 (discussed further below) also provides for ultimate control over the parameters of the cold airflow and thus may further replace an additional metering device in a baseline system that sequentially includes an air-air heat exchanger, a centrifugal separator, an air-fuel heat exchanger, and the metering device (e.g., orifice or venturi or long thin tube whose aspect ratio is effective to provide a choked flow).

The example vortex tube comprises an inlet port 248 to an inlet manifold 250/plenum 252 (forming a swirl chamber) with multiple tangential outlets 254 to an interior 256 of the tube having an inner diameter surface. The tube has a central longitudinal axis 236 extending between the cold air outlet end and the hot air outlet end. The inlet manifold is relatively closer to the cold air outlet end. In one example implementation, the hot air outlet is valved via an actuator 258 axially shifting the hot air outlet centerbody 260 to respectively open and close annular opening 262 between the centerbody and the tube body. Example actuators include electrical actuators such as servomotors. Alternative actuators are hydraulic or pneumatic.

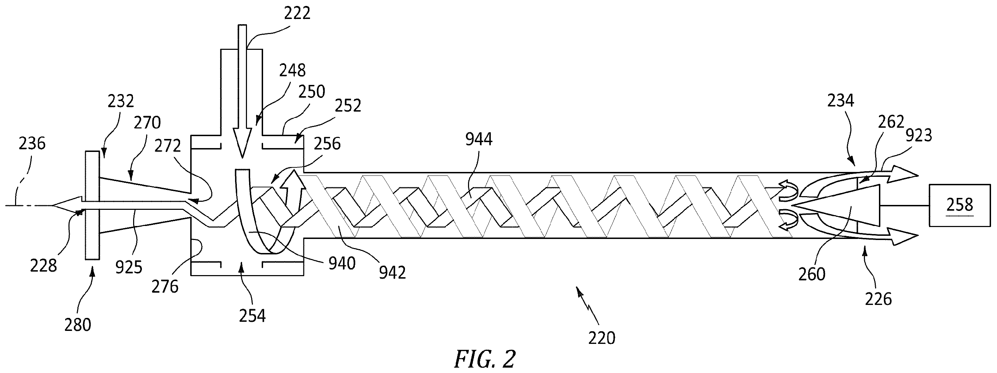

In the example vortex tube shown in FIG. 2, the cold air outlet is formed by diverging nozzle 270 having an upstream end 272 of lower diameter than the tube ID toward the opposite side of the inlet manifold/swirl chamber 250/252. This smaller cross-sectional area and its surrounding shoulder or end wall 276 help bias the flow 940 from the inlet manifold/swirl chamber to flow as the outer vortex 942 toward the hot air outlet. The centerbody 260 allows passage of an outer portion of that flow out the hot air outlet while an inner portion is directed back toward the cold air outlet as the inner vortex 944 which ultimately feeds the cold air discharge flow.

In various implementations, the cold air outlet flow may also be controlled by a valve 280 (e.g., an iris valve). This valve may be positioned in several locations such as the downstream exit of the diverging outlet nozzle 170 (illustrated) or the upstream entrance thereof). Throttling of the valve may be used to limit bleed (and thus losses) while maintaining desired air flow and cooling.

The valves 260/258 and 280 at the hot and cold exits may be controlled to achieve any of the following goals in any combination: maximizing cooling load, minimizing cold exit temperature, minimizing engine bleed flow, maintaining adequate cold flow and/or pressure. The hot and cold outlet in general will typically be maintained at different pressures. To control this, appropriate sensors (pressure and temperature) may be distributed throughout the engine and any external load and coupled to the controller (e.g., microcontroller or engine control unit or FADEC or a central aircraft control system).

In use, an example bleed temperature is 450°C, more broadly 300°C to 600°C. The air-air heat exchanger may reduce this by an example delta of about225°C, more broadly at least 150°C or 150°C to 300°C.

Relative to the vortex tube inlet flow temperature, the cold air outlet temperature may be an example at least 10°C lower, more narrowly 10°C to 75°C lower or at least 20°C lower or 20°C to 75°C lower. Relative to the vortex tube inlet flow temperature, the hot air outlet temperature may be an example at least 10°C higher, more particularly 25°C or 25°C to 175°C higher. The result may be that the flow 921 enters the heat exchanger 220 well above the bypass flow temperature and exits to pass to the vortex tube inlet still above bypass flow temperature but then the cold outlet flow 925 is below the bypass flow temperature.

Relative to the vortex tube hot outlet flow temperature, the cold air outlet temperature may be an example at least 25°C lower, more particularly 25°C to 150°C lower or 45°C to 150°C lower.

The positioning and orientation of the vortex tube may be influenced by the particular application. For example, in some implementations of a high bypass turbofan, to reduce drag in the bypass flowpath, the vortex tube may be located to the outer diameter (OD) side of the bypass flowpath such as inside a cowl structure 300 (FIG. 1). In others, it may be located to the inner diameter (ID) side of the bypass flowpath which is within or mounted to the core case. In a low bypass turbofan, the vortex tube may be mounted in the bypass duct to limit penetrations of the engine case. Nevertheless, it might be mounted external to the engine case within the engine bay of the aircraft.

In some implementations, there may be multiple branches going to the vortex tube inlet manifold (e.g., diametrically opposite branches for evenness of flow). Potentially, such branches may be fed by separate air-air heat exchangers.

Component materials and manufacture techniques and assembly techniques may be otherwise conventional.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. A gas turbine engine (20) comprising:
a compressor (24);
a combustor (56);
a turbine (28);
a gaspath (C) through the compressor (24), combustor (56) and turbine (28);
a bleed flowpath (920) from the gaspath (C);
an air-air heat exchanger (200) having a heat donor leg along the bleed flowpath (920); and
a Ranque-Hilsch vortex tube (220) having an inlet (222) along the bleed flowpath (920) and having a cool air outlet (228) and hot air outlet (226);
a bearing compartment (88); and
a buffer chamber (90A; 90B) for the bearing compartment (88) and coupled to the cool air outlet (228).

2. The gas turbine engine of claim 1 wherein:
the buffer chamber (90A; 90B) is a first buffer chamber (90A; 90B) at a first side of the bearing compartment (88); and
a second buffer chamber (90B; 90A) for the bearing compartment (88) is at a second side of the bearing compartment (88) and coupled to the cool air outlet (228).

3. The gas turbine engine of claim 1 or 2 being a turbofan (20) wherein:
the air-air heat exchanger (200) has a heat receiving leg along a bypass flowpath (B) of the turbofan (20), optionally the hot air outlet (226) is positioned to discharge to a or the bypass flowpath (B).

4. The gas turbine engine of any preceding claim further comprising:
a first seal (92) between the buffer chamber (90A; 90B) and the bearing compartment (88) and a second seal (94) to an opposite side of the buffer chamber (90A; 90B), optionally the second seal (94) is between the buffer chamber (90A; 90B) and an external environment, optionally the first seal (92) and the second seals (94) are between a shaft (40) and static structure (36).

5. The gas turbine engine of any preceding claim wherein:
the gas turbine engine does not have a fuel-air heat exchanger along the bleed flowpath (920).

6. The gas turbine engine of any preceding claim wherein:
the gas turbine engine does not have an orifice or venturi along the bleed flowpath (920).

7. The gas turbine engine of any preceding claim wherein the Ranque-Hilsch vortex tube (220) has:
a controllable hot air outlet valve.

8. The gas turbine engine of claim 7 wherein the controllable hot air outlet valve comprises:
a centerbody (260); and
an actuator (258) for axially shifting the centerbody (260).

9. The gas turbine engine of any preceding claim wherein the Ranque-Hilsch vortex tube (220) has:
a controllable cold air outlet valve (280), optionally wherein the controllable cold air outlet valve (280) is an iris valve (280).

10. A method for using the gas turbine engine of claim 1, the method comprising:
compressing air in the compressor (24);
combusting fuel mixed with the compressed air in the combustor (56);
expanding combustion gas from the combusting in the turbine (28) to drive the compressing;
passing bleed air (921) from the compressor (24) along the bleed flowpath (920) to the Ranque-Hilsch vortex tube (220);
discharging a hot air stream (923) from the hot air outlet (226); and
passing a cold air stream (925) from the cold air outlet (228) to a load (90A; 90B) comprising the buffer chamber (90A; 90B), optionally, the cold air stream (925) bypassing a seal (92) and exiting the bearing compartment (88) as a mixed oil/air outflow (992) along a recirculating oil flowpath including an oil inflow (990) to the bearing compartment (88).

11. The method of claim 10 wherein:
the load (90A; 90B) further comprises a second buffer chamber (90B; 90A) of the bearing compartment (88).

12. The method of claim 10 or 11 further comprising:
controlling a cool air outlet valve (280) and a hot air outlet valve to balance satisfying a cooling or buffering load (90A; 90B) from the cold air outlet (228) while limiting bleed flow (921).

13. A gas turbine engine (20) comprising:
a compressor (24);
a combustor (56);
a turbine (28);
a gaspath (C) through the compressor (24), combustor (56) and turbine (28);
a bleed flowpath (920) from the gaspath (C); and
means (220) for:
receiving air from the bleed flowpath (920);
separating the received air into a hotter portion (942, 923) and a cooler portion (944, 925);
discharging the hotter portion (942, 923); and
passing the cooler portion (944, 925) to a load (90A; 90B), optionally, wherein:
the load (90A; 90B) is a buffer chamber (90A; 90B) for a bearing compartment (88); and/or
the discharging is to a bypass flowpath (B).

14. A method for using a gas turbine engine (20), the method comprising:
compressing air in a compressor section (24);
combusting fuel mixed with the compressed air in a combustor (56);
expanding combustion gas from the combusting in a turbine section (28) to drive the compressing;
passing bleed air (921) from the compressor section (24);
separating the bleed air (921) into a hotter portion (942, 923) and a cooler portion (944, 925);
discharging the hotter portion (942, 923); and
passing the cooler portion (944, 925) to a load (90A; 90B),
optionally, wherein:
the load (90A; 90B) is a buffer chamber (90A; 90B) of a bearing compartment (88); and/or
the cooler portion bypasses a seal (92) and exits the bearing compartment (88) as a mixed oil/air outflow (992) along a recirculating oil flowpath including an oil inflow (990) to the bearing compartment (88); and/or the discharging is to a bypass flowpath (B).

15. The method of claim 14 wherein:
a temperature difference between the hotter portion (942, 923) and the cooler portion (944, 925) is at least 25°C.
